**Europäisches Patentamt**

**European Patent Office**

**Office européen des brevets**

(19)

(11) Veröffentlichungsnummer: **0 452 517 A1**

## (12) EUROPÄISCHE PATENTANMELDUNG

(21) Anmeldenummer: **90105265.4**

(22) Anmeldetag: **20.03.90**

(51) Int. Cl.[5]: **G06F 7/02, G06F 7/48**

(43) Veröffentlichungstag der Anmeldung:
**23.10.91 Patentblatt 91/43**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Linnenberg, Gerhard, Dr.-Ing.**
**Leonhardstrasse 23**
**W-8905 Mering(DE)**

(54) **Zwei-Summen-Vergleicher.**

(57) Zwei-Summen-Vergleicher, bei dem der Vergleich zweier Summen durch den Vergleich ihrer Differenz mit Null ausgeführt wird. Die Differenzbildung zweier Summen, die im wesentlichen eine Vier-Summanden-Addition ist, wird nach dem Carry-Save-Prinzip auf eine Zwei-Summanden-Addition zurückgeführt. Die verbleibende Zwei-Summanden-Addition wird nicht ausgeführt, sondern es wird direkt der eine Summand mit dem negativen des anderen in einem Binärzahlen-Vergleicher verglichen.

Die Erfindung betrifft eine Schaltungsanordnung zum Vergleich einer Summe zweier Binärzahlen mit einer Summe zweier weiterer Binärzahlen.

Bei vielen Anwendungsfällen ist es notwendig, zwei Binärzahlen zu vergleichen, die ihrerseits jeweils eine Summe zweier Binärzahlen darstellen. Üblicherweise werden dazu zunächst die beiden Summen gebildet und anschließend die Summationsergebnisse einander gegenübergestellt. Zur Summenbildung sind zwei Schaltungsprinzipien gebräuchlich: Zum einen finden Ein-Bit-Volladdierer (Carry-Ripple-Adder) Verwendung, an deren Eingänge jeweils zwei gleichwertige Stellen der beiden zu addierenden Binärzahlen und die Übertragsstelle des Ein-Bit-Volladdierers für die jeweils nächstkleinere Stelle gelegt sind. Dabei kann der Schaltungsaufwand relativ gering gehalten werden, jedoch ist die Rechenzeit eines derartigen Addierers wesentlich größer als die der Einzelstufen. Zum anderen kommen aber auch Addierer mit paralleler Übertragslogik (Carry-Look-Ahead-Adder) zum Einsatz, bei denen alle Überträge direkt aus den Eingangsvariablen berechnet werden, die dadurch also eine geringere Rechenzeit aufweisen, jedoch aufgrund der zusätzlichen Logik einen höheren Schaltungsaufwand erfordern. Beide Prinzipien sind u.a. in U. Tietze, Ca. Schenk, Halbleiter-Schaltungstechnik, 5. Auflage 1980, Seiten 473 bis 477 beschrieben.

Aufgabe der Erfindung ist es, eine Schaltungsanordnung zum Vergleich einer Summe zweier Binärzahlen mit einer Summe zweier weiterer Binärzahlen anzugehen, die bei geringer Rechenzeit einen geringen schaltungstechnischen Aufwand erfordert.

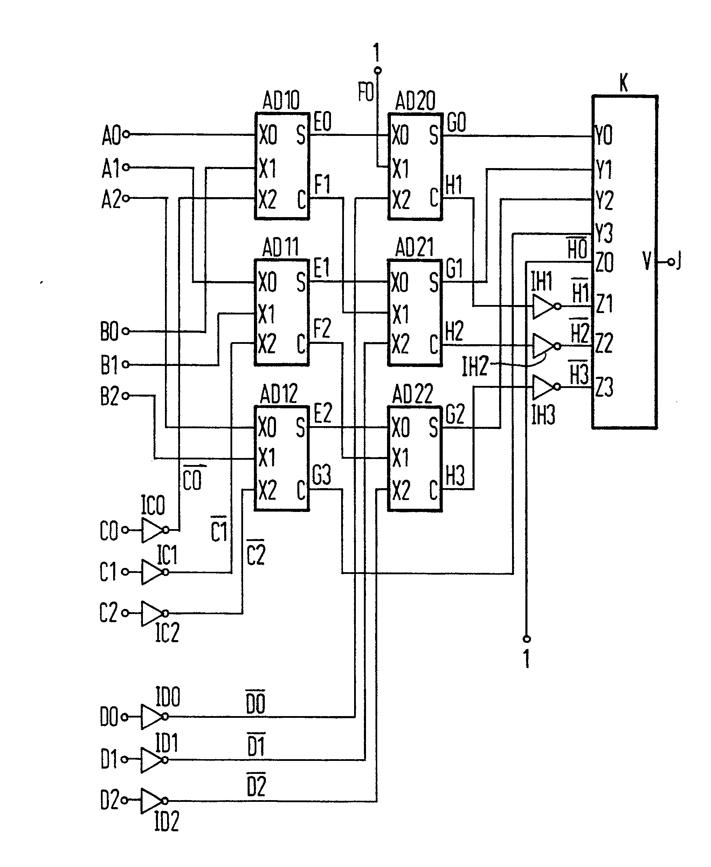

Diese Aufgabe wird durch eine Schaltungsanordnung gemäß dem einzigen Patentanspruch gelöst. Die Erfindung wird nachfolgend anhand des in der einzigen FIG der Zeichnung dargestellten Ausführungsbeispiel näher erläutert.

Bei dem gezeigten Ausführungsbeispiel soll die Summe aus einer ersten Binärzahl mit $n = 3$ Stellen $A0,A1,A2$ und aus einer zweiten Binärzahl mit $n = 3$ Stellen $B0,B1,B2$ mit der Summe aus einer dritten Binärzahl mit $n = 3$ Stellen $C0,C1,C2$ und aus einer vierten Binärzahl mit $n = 3$ Stellen $D0,D1,D2$ verglichen werden. Dazu sind drei Ein-Bit-Volladdierer $AD10,AD11,AD12$ vorgesehen, an deren Eingänge $X0,X1,X2$ jeweils die Stellen gleicher Wertigkeit von erster, zweiter und invertierter dritter Binärzahl angelegt sind. Daraus ergibt sich beispielsweise, daß bei dem Ein-Bit-Volladdierer $AD10$ die Eingänge $X0,X1,X2$ mit den niederwertigsten Stellen $A0,B0,\overline{C0}$ der ersten, zweiten und invertierten dritten Binärzahl belegt sind, daß bei dem Ein-Bit-Volladdierer $A11$ die Eingänge $X0,X1,X2$ mit den nächsthöheren Stellen $A1,B1,\overline{C1}$ dieser Binärzahlen belegt sind und daß bei dem Ein-Bit-Volladdierer $A12$ die Eingänge $X0,X1,X2$ mit den höherwertigsten $A2, B2,\overline{C2}$ dieser Binärzahlen belegt sind. Die Invertierung der einzelnen Stellen $C0,C1,C2$ der dritten Binärzahl erfolgt mit Hilfe von drei Invertern $IC0,IC1,IC2$.

Die Ein-Bit-Volladdierer $AD10,AD11,AD12$ weisen jeweils zwei Ausgänge S und C auf, an denen das Summationsergebnis anliegt. Am Ausgang S liegt ein Ergebnisbit an, das eine um eine Stelle niedrigere Wertigkeit besitzt als ein am jeweiligen Ausgang C anliegendes Übertragsbit. Das bedeutet, daß insgesamt drei Ergebnisbits $E0,E1,E2$ und drei Übertragsbits $F1,F2,G3$ an den drei Ein-Bit-Volladdierern $AD10,AD11,AD12$ auftreten. Niedrigste Wertigkeit hat dabei das Ergebnisbit $E0$, nächsthöhere Wertigkeit haben Ergebnisbit $E1$ und Übertragsbit $F1$, wiederum nächsthöhere Wertigkeit haben Ergebnisbit $E2$ und Übertragsbit $F2$ und schließlich höchste Wertigkeit hat das Übertragsbit $G3$.

Die Ergebnisbits und die Übertragsbits gleicher Wertigkeit sowie die Stellen gleicher Wertigkeit der invertierten vierten Binärzahl sind jeweils auf die Eingänge weiterer ihnen jeweils zugeordneter Ein-Bit-Volladdierer $AD20,AD21,AD22$ geführt, wobei die Invertierung der einzelnen Stellen $D0,D1,D2$ der vierten Binärzahl mit Invertern $ID0,ID1,ID2$ erfolgt. Somit sind die Eingänge $X0,X1,X2$ des Ein-Bit-Volladdierers $AD20$ mit dem Ergebnisbit $E0$ und der Stelle $\overline{D0}$ der invertierten vierten Binärzahl, die Eingänge $X0,X1,X2$ des Ein-Bit-Volladdierers $A21$ mit dem Ergebnisbit $E1$, dem Übertragsbit $F1$ und der Stelle $\overline{D1}$ der invertierten vierten Binärzahl und die Eingänge $X0,X1,X2$ des Ein-Bit-Volladdierers $A22$ mit dem Ergebnisbit $E2$, dem Übertragsbit $F2$ und der Stelle $\overline{D2}$ der invertierten vierten Binärzahl belegt. Ein Eingang des Volladdierers $AD20$ wird auf diese Weise allerdings nicht angesteuert, da das niederwertigste Übertragsbit eine um eine Stelle höhere Wertigkeit aufweist als das niederwertigste Ergebnisbit. Dieser Eingang, im vorliegenden Ausführungsbeispiel der Eingang $X1$ des Ein-Bit-Volladdierers $AD20$, wird aus Gründen, die noch zu erläutern sind, auf eine logische "Eins" gesetzt.

An den Ausgängen S und C der Ein-Bit-Volladdierer $AD20,AD21, AD22$ werden die Summationsergebniss als Ergebnisbits $G0,G1,G2$ und die Übertragsbits $H1,H2,H3$ ausgegeben. Die Ergebnisbits $G0$, $G1,G2$ der Ein-Bit-Volladdierer $AD20,AD21,AD22$ bilden nun die drei niederwertigen Stellen und das Übertragsbit $G3$ des Ein-Bit-Volladdierers $AD12$ die höherwertigste Stelle einer fünften Binärzahl, während die Übertragsbits $H1,H2,H3$ der Ein-Bit-Volladdierer $AD20,AD21,AD22$ die höherwertigen Stellen einer sechsten Binärzahl bilden. Die niedrigste Stelle der sechsten Binärzahl sei aus Gründen, die ebenfalls noch zu erläutern sind, gleich einer logischen "Eins" gesetzt.

Fünfte und sechste Binärzahl werden anschließend durch einen Binärzahlen-Vergleicher K miteinander verglichen. Das Ergebnis dieses Vergleiches, eines Größer-Vergleiches, Kleiner-Vergleiches und/oder Ist-Gleich-Vergleiches, wird an einem Ausgang V des Binärzahlenvergleichers K mittels eines Ausgangsbits J ausgegeben.

Bei einer erfindungsgemäßen Schaltungsanordnung werden also nicht zwei Summen explizit gebildet und diese miteinander verglichen, sondern es wird zunächst von einem Vergleich der Differenz beider Summen mit Null ausgegangen. Die Differenzbildung zweier Summen, die im wesentlichen eine Vier-Summanden-Addition ist, wird auf eine Zwei-Summanden-Addition nach dem Carry-Save-Prinzip zurückgeführt, wobei die Zwei-Summanden-Addition nicht ausgeführt wird, sondern es wird direkt der eine Summand dem negativen des anderen in einem Binärzahlen-Vergleicher gegenübergestellt. Die Differenzbildung erfolgt durch Addition einer Binärzahl mit einer negativen anderen Binärzahl, wobei die negative Binärzahl im Zweierkomplement vorliegt. Das Zweierkomplement einer Binärzahl ergibt sich durch bitweise Invertierung und Addition mit einer Eins. Die Invertierung erfolgt bei der in dem Ausführungsbeispiel dargestellten erfindungsgemäßen Schaltungsanordnung durch die Inverter IC0,IC1,IC2,ID0,ID1,ID2, IH1,IH2,IH3.

Die Addition der Eins erfolgt hierbei ohne zusätzliche Addierer, da nach jeder der beiden Volladdiererstufen mit den Ein-Bit-Volladdierern AD10,AD11,AD12 bzw. AD20,AD21,AD22 die Übertragsbits gegenüber den jeweiligen Ergebnisbits in der Wertigkeit um eine Stelle erhöht sind, so daß das dem niederwertigsten Ergebnisbit entsprechende Übertragsbit immer gleich einer logischen "Null" ist. Wird dieses jedoch gleich einer logischen "Eins" gesetzt, so entspricht dies einer Addition mit Eins und bedeutet in Zusammenhang mit der Invertierung der dritten Binärzahl die Bildung des Zweierkomplements der dritten Binärzahl. Somit wird der Eingang des Ein-Bit-Addierers AD20 mit einem Übertragsbit F0 gleich einer logischen "Eins" gesetzt. Auch die niedrigste Stelle der sechsten Binärzahl sei zunächst gleich einer logischen "Eins" gesetzt, was wiederum einer Addition mit Eins entspricht und mit der Invertierung der vierten Binärzahl zusammen das Zweierkomplement der vierten Binärzahl ergibt. Da die sechste Binärzahl jedoch anschließend invertiert wird, werden nun lediglich die Übertragsbits H1,H2,H3 mittels Inverter IH1, IH2,IH3 invertiert und stattdessen sei die niederwertigste Stelle $\overline{H0}$ der invertierten sechsten Binärzahl mit den Stellen $\overline{H0}$, $\overline{H1},\overline{H2},\overline{H3}$ gleich einer logischen "Null" gesetzt, wodurch ein Inverter eingespart wird. Schließlich ist aber noch das Zweierkomplement der sechsten Binärzahl zu bilden. Nach der Invertierung muß nun auch hier eine Eins addiert werden. Da die niedrigste Stelle $\overline{H0}$ der invertierten sechsten Binärzahl, wie bereits gezeigt, immer gleich einer logischen "Null" ist, braucht auch hier zum Zwecke der Addition mit Eins diese Stelle lediglich gleich einer logischen "Eins" gesetzt werden.

Der zusätzliche Aufwand gegenüber einem gebräuchlichen Schaltungsprinzip mit zwei jeweils aus n Ein-Bit-Volladdierern aufgebauten Summierern und einem Vergleicher liegt lediglich bei maximal 3n Invertern, wobei n die maximale Zahl der Stellen der zu addierenden Binärzahlen ist. Damit erhöht sich der Aufwand nur geringfügig, während die Rechenzeit sich jedoch stark verkürzt und in der Größenordnung der mit Summierern nach dem Carry-Look-Ahead-Prinzip erreichbaren Rechenzeit liegt, die jedoch, wie eingangs bereits angesprochen, einen wesentlich höheren zusätzlichen Schaltungsaufwand erfordern. Eine bevorzugte Anwendung eines erfindungsgemäßen Zwei-Summen-Vergleichers liegt beispielsweise in der Realisierung des Viterbi-Algorithmus', z.B. aus G. David Forny, Junior, the Viterbi Algorithm, Proc. IEEE, Vol. 61, Nr. 3, March 1973 bekannt.

**Patentansprüche**

1. Schaltungsanordnung zum Vergleich einer Summe aus einer maximal n-stelligen ersten Binärzahl (A0,A1,A2) und aus einer maximal n-stelligen zweiten Binärzahl (B0,B1,B2) mit einer Summe aus einer maximal n-stelligen dritten Binärzahl (C0,C1,C2) und aus einer maximal n-stelligen vierten Binärzahl (D0,D1,D2),
mit n ersten Invertern (IC0,IC1,IC2), an deren Eingänge die dritte Binärzahl (C0,C1,C2) angelegt ist und an deren Ausgängen die invertierte dritte Binärzahl ($\overline{C0},\overline{C1},\overline{C2}$) anliegt,
mit n zweiten Invertern (ID0,ID1,ID2), an deren Eingänge die vierte Binärzahl (D0,D1,D2) angelegt ist und an deren Ausgängen die invertierte vierte Binärzahl ($\overline{D0},\overline{D1},\overline{D2}$) anliegt,
mit n ersten Ein-Bit-Volladdierern (AD10,AD11,AD12), an deren Eingänge (X0,X1,X2) jeweils die Stellen (A0,B0,$\overline{C0}$;A1,B1,$\overline{C1}$;A2, B2,$\overline{C2}$) gleicher Wertigkeit von erster, zweiter und invertierter dritter Binärzahl (A0,A1,A2;B0,B1,B2;$\overline{C0},\overline{C1},\overline{C2}$) angelegt sind und an deren Ausgängen (S,C) jeweils ein Ergebnisbit (E0,E1,E2) und jeweils ein Übertragsbit (F1,F2,G3) mit einer gegenüber dem jeweiligen Ergebnisbit (E0,E1,E2) um eine Stelle höheren Wertigkeit anliegt,
mit n zweiten Ein-Bit-Volladdierern (AD20,AD21,AD22), an deren Eingänge (X0,X1,X2) jeweils die Ergebnisbits (E0,E1,E2) und die Übertragsbits (F1,F2) der ersten Ein-Bit-Volladdierer (AD10,AD11, AD12) und die Stellen der invertierten vierten Binärzahl ($\overline{D0},\overline{D1}, \overline{D2}$) mit jeweils gleicher Wertigkeit angelegt sind, wobei das der Stelle mit geringster Wertigkeit entsprechende Übertragsbit (F0) gleich einer logischen Eins gesetzt ist, und an deren Ausgängen (S,C) jeweils ein Ergebnisbit (G0,G1,G2) und jeweils ein Übertragsbit (H1,H2,H3) mit einer gegenüber dem jeweiligen Ergebnisbit (G0,G1,G2) um eine Stelle höheren Wertigkeit anliegt,

mit n dritten Invertern (IH1,IH2,IH3), an deren Eingänge jeweils die Übertragsbits (H1,N2,H3) der zweiten Ein-Bit-Volladdierer (AD20,AD21,AD22) angelegt sind und an deren Ausgängen die invertierten Übertragsbits ($\overline{H1},\overline{H2},\overline{H3}$) anliegen, und

mit einem Binärzahlen-Vergleicher (K), an dessen ersten Eingängen (Y0,Y1,Y2,Y3) eine fünfte Binärzahl, deren niederwertige Stellen durch die Ergebnisbits (G0,G1,G2) der zweiten Ein-Bit-Volladdierer (AD20,AD21,AD22) mit entsprechenden Wertigkeiten und deren Stelle mit höchster Wertigkeit durch das Übertragsbit (G3) des ersten Ein-Bit-Volladdierers (G3) mit höchster Wertigkeit gegeben sind, und an dessen zweiten Eingängen (Z1, Z2,Z3) eine sechste Binärzahl, deren höherwertige Stellen durch die invertierten Übertragsbits ($\overline{H1},\overline{H2},\overline{H3}$) der zweiten Ein-Bit-Volladdierer (AD20,AD21,AD22) mit entsprechenden Wertigkeiten und deren Stelle mit niedrigster Wertigkeit durch eine logische Null gegeben sind, angelegt ist.

**Europäisches Patentamt**

**EUROPÄISCHER RECHERCHENBERICHT**

Nummer der Anmeldung

**EP 90 10 5265**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 191 452  (SIEMENS)<br>* Abbildung 14; Titel *<br>– – – | 1 | G 06 F 7/02<br>G 06 F 7/48 |
| A | US-A-3 299 261  (STEIGERWALT)<br>* Abbildung 3b; Spalte 6, Zeilen 49-75 *<br>– – – – – | 1 | |

| | | | RECHERCHIERTE SACHGEBIETE (Int. Cl.5) |
|---|---|---|---|
| | | | G 06 F |

Der vorliegende Recherchenbericht wurde für alle Patentansprüche erstellt

| Recherchenort | Abschlußdatum der Recherche | Prüfer |
|---|---|---|
| Den Haag | 16 November 90 | KHAZAM U.J. |